# EUROPEAN PATENT APPLICATION

(11) **EP 0 965 958 A1**
(43) Date of publication of application: **22.12.1999**
(21) Application number: 98830374.9
(22) Date of filing: 19.06.1998
(51) Int. Cl.: G07F 7/08, H04M 17/00, G07F 19/00

(54) **Apparatus for charging a credit onto a portable device for holding electronic cash**

(71) Applicant: Guerrini, Dario, 19123 La Spezia (IT)
(72) Inventor: Guerrini, Dario, 19123 La Spezia (IT)
(74) Representative: Pezzoli, Ennio

(57) **Abstract**

Apparatus (100) for charging a portable device (105) for holding electronic cash comprises means for adding a credit to the portable device (105) for holding electronic cash in response to corresponding control signals, first connection means (115, 120) for connection to a telephone network (130) and second connection means (135) for connection to a telephone (140), the telephone (140) controlling connection of the charging apparatus (100), by means of the telephone network (130), to a remote system (145) which can supply the credit, the remote system (145) sending the control signals to the charging apparatus (100).

## Description

The present invention relates to apparatus for charging a portable device for holding electronic cash and, in particular, to apparatus according to the preamble of the first claim.

Portable devices for holding electronic cash such as, for example, smart cards, are widely used for making commercial transactions of various types. A smart card is constituted by a card housing a chip of semiconductor material which can store a cash credit as well as other service information. This credit can be spent, for example, in order to make purchases at shops, to pay for viewing television programmes, for motor-way tolls, and the like.

The credit is charged onto the smart card by means of suitable apparatus. Known charging apparatus provides for bank notes to be inserted until a desired amount is reached; this amount is then stored (in addition to the pre-existing amount) in the chip of semiconductor material of the smart card. Alternatively, charging apparatus enables the desired amount to be drawn from a current account at a credit institution. The charging apparatus is generally installed inside credit institutions (for use under the control of the credit institution's operators) or immediately outside credit institutions, in the case of automatic apparatus usable directly by a final user.

A disadvantage of known charging apparatus is that, in any case, it requires the user to perform the recharging at the credit institution's premises (during the hours when they are open to the public if the apparatus is installed inside), resulting in inconvenience and wastage of time. Moreover, the charging apparatus is fitted in dedicated structures produced specially for this purpose and is extremely complex and expensive.

The object of the present invention is to prevent the aforementioned problems. To achieve this object, apparatus for charging a portable device for holding electronic cash as described in the first claim is proposed.

The present invention also proposes a corresponding charging method.

Further characteristics and the advantages of the charging apparatus according to the present invention will become clear from the following description of different preferred embodiments thereof, given by way of non-limiting example, with reference to the appended drawings, in which:
Figure 1 shows schematically the charging apparatus of the present invention,
Figure 2 is a basic circuit diagram of a first embodiment of the charging apparatus,
Figure 3 is a flow chart showing a method used for controlling the charging apparatus of Figure 2,
Figure 4 is a basic circuit diagram of a second embodiment of the charging apparatus,
Figure 5 is a flow chart showing a method used to control the charging apparatus of Figure 4.

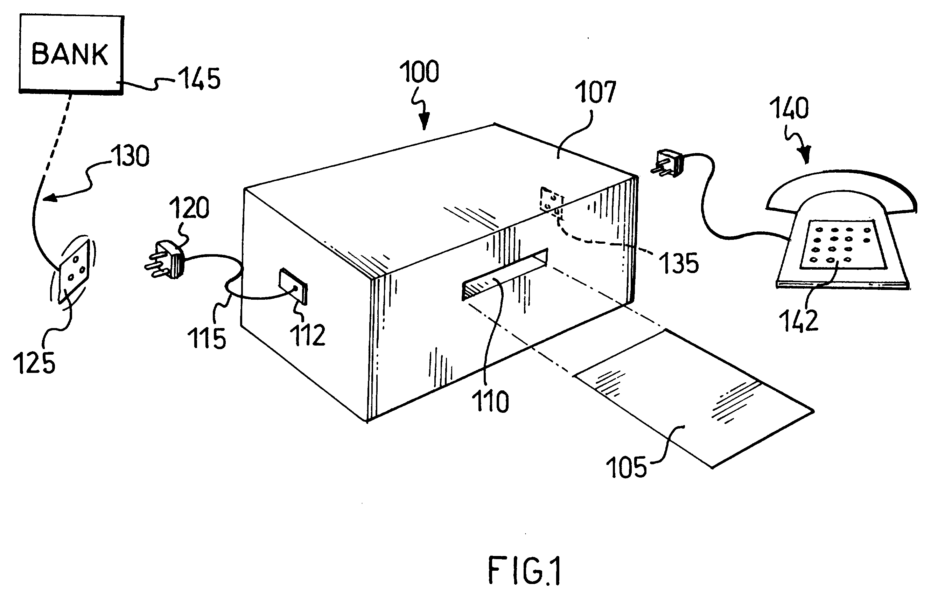

With reference in particular to Figure 1, this shows apparatus 100 for charging credit onto a smart card 105. The charging apparatus 100 has a box-like housing 107 (made, for example, of plastics material) a front wall of which has a slot 110 in which the smart card 105 is inserted (at least partially) during a charging operation. Alternatively, the smart card is connected to the charging device in a different manner, or a contactless device with magnetic or radio-frequency coupling, a card with a magnetic strip or, in general, any other portable device for holding electronic cash, is used.

The charging apparatus 100 has a connector 112 (disposed on a left-hand side wall of the box-like housing 107), connected to a flexible cable 115 terminating in a plug 120; the plug 120 is inserted in a normal telephone socket 125 in order to connect the charging apparatus 100 to a line 130 of a telephone network. A right-hand side wall of the box-like housing 107 also has a socket 135 for connection to a telephone 140. Similar considerations apply if the charging apparatus has other equivalent means for connection to the telephone network and to the telephone, respectively.

The telephone 140 has a keypad 142 for dual-tone modulation frequency (or DTMF) dialling of telephone numbers. The charging apparatus of the present invention may, however, also be used with a telephone having a dial, with a cell phone, with a different type of modulation for the transfer of data on the telephone line, etc.

When a user wishes to charge a credit onto the smart card 105, the smart card 105 is inserted in the slot 110. The charging apparatus 100 is then connected, by means of the telephone line 130, to a remote system (BANK) 145 which can supply the credit. Typically, the remote system 145 is constituted by a computer of a credit institution at which the user has a current account from which the credit to be charged onto the smart card 105 can be drawn; alternatively, the remote system is a service centre which controls credit cards, pay-per-view television programmes, motor-way tolls, cell phones with prepaid cards, and the like.

The connection between the charging apparatus 100 and the remote centre 145 is controlled by the telephone 140. In particular, the user dials a telephone number of the remote system 145 by means of the keypad 142 and waits for the remote system 145 to answer. The user identifies his current account by a code and a password input by means of the keypad 142 in response to voice messages (pre-recorded or generated by a voice synthesizer) sent by the remote system 145 in accordance with a predetermined security standard. Once the user has obtained access to his current account, the remote system 145 invites the user to identify the type of operation required, by means of a similar process. If the user selects an operation to charge a credit of a certain sum (set by means of the keypad 142) onto the smart card 105, the charging apparatus is activated (manually or automatically as described in detail below). The remote system 145 thus sends control signals corresponding to the credit to the charging apparatus 100; the apparatus 100 adds the credit to the smart card 105 in response to these control signals and sends signals confirming the completion of the operation to the remote system 145 so that the amount corresponding to the credit is subtracted from the user's current account. At this point, the charging apparatus 100 is de-activated and the remote system 145 sends a voice message that the operation is completed to the user who can perform further operations or terminate the connection. Similar considerations apply with the use of different protocols for dialogue with the remote system, or different user-identification operations which may even have several steps controlled manually by means of a remote operator, etc.

The apparatus of the present invention enables a credit to be charged directly onto the device for holding electronic cash, at home, with the use of a normal telephone. This makes the use of such devices for holding electronic cash extremely convenient and practical; the charging operation can in fact be performed at any time without the need to leave home, thus saving time.

Moreover, the charging apparatus of the present invention is easy to operate; in particular, the charging operation is performed with the aid of a normal telephone, that is, with an object which is familiar *per se* to the user and is thus easy to use.

All of the connection and identification operations with the remote centre are controlled by means of the telephone so that the charging apparatus according to the present invention is extremely simple and cheap.

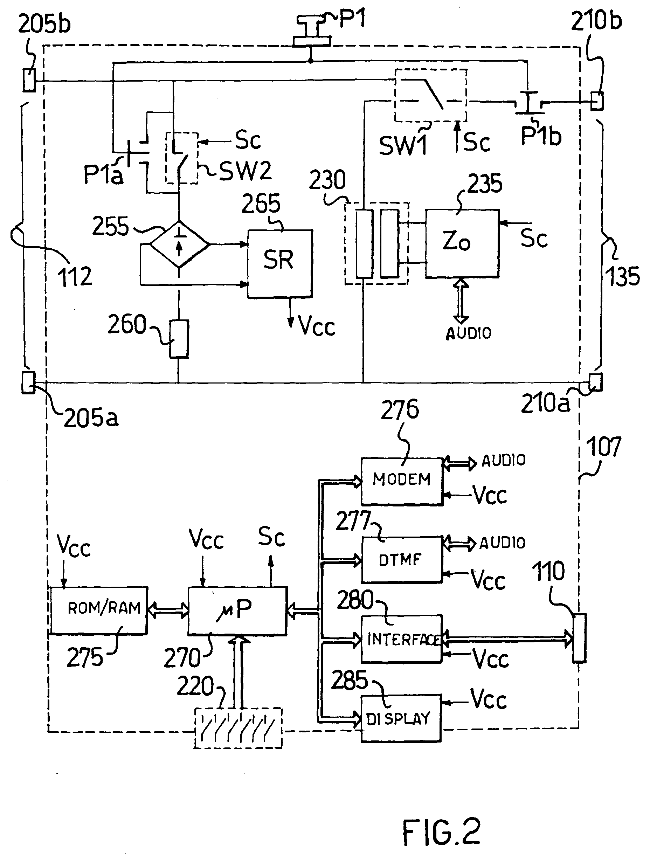

With reference now to Figure 2 (elements already shown in Figure 1 are identified by the same reference numerals), the connector 112 (for connection to the telephone line) has two input terminals 205a, 205b, and the socket 135 (for connection to the telephone) has two output terminals 210a, 210b. A dual-section push-button P1 (which controls two internal switches P1a and P1b) and a set of configuration switches 220 are also accessible to the user on the outside of the box-like housing 107.

The input terminal 205a is connected directly to the output terminal 210a. The input terminal 205b is connected selectively, by means of a switch SW1, to a first terminal of the switch P1b a second terminal of which is connected to the output terminal 210b, and to a first input terminal of a line interface circuit 230 (constituted basically by a de-coupling transformer) a second input terminal of which is connected to the terminal 205a. The interface circuit 230 has two output terminals connected to a variable impedance adaptor (Zo) 235 formed, for example, by a network of cells with CMOS transistors.

The switches P1a and SW2 are connected in parallel with one another between the input terminal 205b and a first input terminal of a rectifier circuit 255 (generally formed by a diode bridge); a second input terminal of the rectifier circuit 255 is connected to the terminal 205a via a reactive load 260.

The rectifier circuit 255 has two output terminals connected to a switching regulator (SR) 265 which produces, at its own output terminal, a supply voltage Vcc, for example, of 5V (relative to a reference or earth terminal); this output terminal of the regulator 265 is connected to the supply terminals of the various active components of the charging apparatus. In particular, the charging apparatus includes a microprocessor (µP) 270 (or another equivalent control-logic means) which is connected to a memory 275 (comprising a non-volatile memory ROM for storing a control program for the microprocessor 270 and a volatile working memory RAM), to a modulator-demodulator device (a modem) 276, to a DTMF code receiver/transmitter 277, to an interface 280 (which controls coupling with the smart card inserted in the slot 110), and to a display 285 (possibly with a Braille device). The microprocessor 270 is also connected to the set of configuration switches 220 and also controls the impedance adaptor 235, the switch SW1 and the switch SW2 by means of suitable control signals (collectively indicated Sc). The modem 276 and the DTMF device 277 are also connected to the impedance adaptor 235 in order to receive and to transmit an audio signal on the telephone line.

Normally (as shown in the drawing) the switches P1a and SW2 are open, the switch P1b is closed and the switch SW1 is in a position in which the input terminal 205b is connected to the output terminal 210b by means of the switch P1b. In these conditions, the telephone is connected directly to the telephone line. The other components of the charging apparatus are disconnected from the telephone line; the active components thus receive no supply voltage and are therefore disabled. The user can thus use the telephone normally since the charging apparatus does not interfere with its operation in any way.

When the user wishes to charge a credit onto the smart card, he makes a connection with the remote system (by means of the telephone) and, once the identification operations have been performed, waits for an invitation by the remote system to activate the charging apparatus. At this point, the user pushes the button P1, closing the switch P1a and opening the switch P1b. The rectifier circuit 255 is thus connected to the telephone line and the telephone is simultaneously disconnected so that the telephone line is not overloaded with an energy requirement greater than the maximum permitted. It should be noted that, because the two sections (P1a and P1b) of the push-button P1 may have different switching speeds, a condition of transient overloading of the telephone line, in which both switches P1a and P2b are closed, may occur; however, this overloading is of extremely short duration (of the order of a few ms) and can thus be tolerated without problems on the basis of current norms.

In this situation, the rectifier circuit 255 receives, as an input from the telephone line, a signal constituted by a direct-current component with positive or negative polarity (for example ±60V) on which a variable component is superimposed. The rectifier circuit 255 outputs a signal of fixed polarity (for example +55V, in view of the losses caused by its internal diodes) which is supplied to the input of the regulator 265 so as to obtain the supply voltage Vcc as an output (the reactive load 260 has substantially zero direct-current impedance so as not to dissipate energy).

The regulator 265 maintains the correct galvanic (direct current) connection with the telephone line, absorbing a current which does not exceed the maximum holding current of the telephone line (for example 80 mA); it should be noted that the activation time of the regulator 265 has to be sufficiently short and in any case less than the holding time of the telephone line for galvanic opening of the connection.

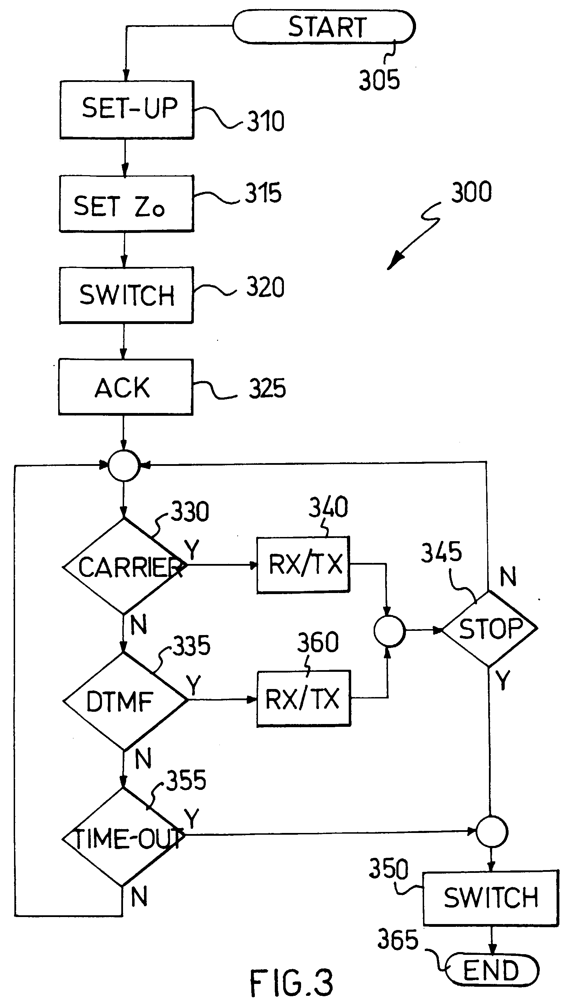

At the same time, the regulator 265 supplies the active components of the charging apparatus (providing, for example, a power of 1W). In particular, the microprocessor 270 is activated and loads a suitable control program from the ROM memory 275. With reference to Figure 2 and Figure 3 in combination, a method 300 corresponding to this control program starts at box 305 and then goes to box 310 in which the microprocessor 270 initializes the charging apparatus, loading configuration data from the ROM memory 275, detecting the settings of the set of switches 220, and loading state data relating to a previous connection with the remote system from the RAM memory 275 (which is supplied constantly, for example, by means of a lithium battery).

The method then goes on to box 315 in which the microprocessor 270 sets the impedance adaptor 235 to a predetermined (modulus and phase) balancing value, which responds to the specific requirements of the telephone network of the country in which the charging device is used (the reactive load 260 has an extremely high alternating-current impedance value so as hot to alter the value of the impedance at the input terminals 205a, 205b substantially). The balancing impedance value is determined in dependence on the settings of the set of switches 220. The charging apparatus is thus multi-standard apparatus and can easily be adapted to the specific requirements of various countries directly by the user. Similar considerations apply if the balancing impedance value is stored in the ROM memory associated with the microprocessor, etc; the present invention may, however, also be implemented with a fixed balancing impedance value (set at the value corresponding to the destination country of the charging apparatus during manufacture).

The method then goes on to box 320 in which the microprocessor 270 switches the switch SW1 to a position in which the telephone line (input terminals 205a and 205b) is connected to the line interface circuit 230 so as to be correctly balanced for alternating current by the impedance adaptor 235. It should be noted that the transient stage in which the telephone line is not correctly balanced for alternating current is of extremely short duration (of the order of a few ms) so that it can be tolerated without any problem.

At the same time, the microprocessor 270 closes the switch SW2. When (for example, after 1 or 2 seconds) the user releases the push-button P1 (opening the switch P1a and closing the switch P1b) the telephone line thus remains connected to the rectifier circuit 255 and to the line interface circuit 230.

In this situation, the telephone line is completely controlled by the charging apparatus which, in box 325, sends a set of identification signals to the remote system. The method then goes on to box 330 in which it is checked whether the audio signal received from the telephone line has a frequency corresponding to that of the carrier of the modem 276. If not, the method goes to box 335 (described below). In the affirmative case, the method goes to box 340 in which the transmitted audio signal is received, the functions associated with this audio signal are performed, and any response signal is sent to the remote system. The microprocessor 270 then checks in box 345 whether the audio signal received indicates that the connection should be interrupted (for example, because the charging operation is completed, or because it cannot be performed). If not, the method goes back to box 330 whereas in the affirmative case, the method goes on to box 350 (described below).

With reference now to box 335, it is likewise checked whether the audio signal received from the telephone line is constituted by DTMF tones. If not the method goes on to box 355 (described below). In the affirmative case, the method goes to box 360, in which the operations associated with this audio signal are performed, and then goes to box 345 described above.

The data can thus be exchanged with the remote system both by means of the modem 276 and by means of the DTMF device 277; for example, service information (such as error signals and the like) is controlled by means of the DTMF device 277 whilst the data are controlled by means of the modem 276, ensuring maximum transmission speed in both conditions. Moreover, the solution is extremely flexible since it allows any type of modulation to be used for the transfer of data on the telephone line. Alternatively, it is possible to use solely the (less expensive) DTMF device, or solely the modem (which generally ensures greater speed), or other equivalent means.

At the same time, data relating to the charging operation (for example, the activation of the apparatus, the amount present on the smart card, the credit requested, error signals, and the like) are supplied to the user by means of the display 285; the messages are advantageously displayed in a language corresponding to the country in which the charging apparatus is used, in accordance with the setting of the set of switches 220. Alternatively, simple indicator lights each associated with a particular situation (such as failure to insert the smart card, loss of telephonic communication, and the like), an acoustic alarm, or other equivalent indication means are provided; the present invention may, however, also be implemented without any system for providing an indication of the state of the charging operation (this indication being supplied, for example upon completion, by means of the telephone).

With reference now to box 355, the microprocessor checks the duration of a period of time which has elapsed from the start of the connection with the remote system and, if the duration of this period exceeds a predetermined value (time-out), for example, of 1 minute, the method goes on to box 350 or, if not, the method goes back to box 330.

With reference to box 350, after the microprocessor 270 has saved state data relating to the connection in the RAM memory 275, it switches the switch SW1 and, at the same time, opens the switch SW2 so that the charging apparatus is automatically de-activated and control of the telephone line is restored to the telephone. The method then ends in the final box 365, waiting for the microprocessor 270 (which is no longer supplied by the regulator 265) to switch off.

Similar considerations apply if the memory does not have a battery so that the charging apparatus does not store any state data, or if a time-out mechanism is not provided, or if another equivalent control program is used.

The structure described above does not require any external supply since it uses the energy present on the telephone network (within the permitted limits and with the permitted specifications). Moreover, the charging apparatus is extremely simple, can be mass-produced at very low cost, and can be produced in compact form and housed in a small container.

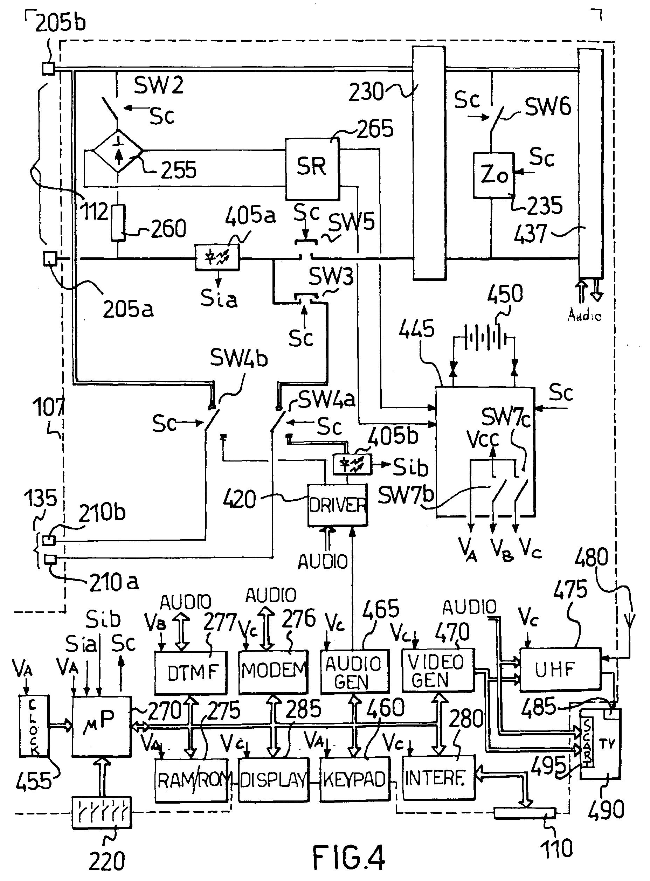

In a different embodiment of the present invention, as shown in Figure 4, (the elements already shown in Figure 2 are identified by the same reference numerals) the input terminal 205a is connected to a first terminal of a current detector 405a (constituted, for example, by a photodiode optically connected to a phototransistor), a second terminal of which is connected to a first terminal of a switch SW3; a second terminal of the switch SW3 is connected selectively, by means of a switch SW4a, to the output terminal 210a and to a first terminal of a further current detector 405b a second terminal of which is connected to a first terminal of a telephone driver circuit 420 (which can supply the telephone correctly, simulating the actual telephone line). The input terminal 205b is connected selectively, by means of a further switch SW4b, to the output terminal 210b or to a second terminal of the driver circuit 420.

The input terminal 205b is also connected to the first input terminal of the line interface circuit 230, the second input terminal of which is connected, by means of a switch SW5, to the second terminal of the current detector 405a (and hence to the input terminal 205a). A fork 437 which separates the audio signal received from the audio signal transmitted on the telephone line is connected in parallel with a switch SW6 and the variable impedance adaptor 235 which are connected in series between the output terminals of the line interface circuit 230.

The output terminals of the rectifier circuit 255 are connected, via the regulator 265, to corresponding input terminals of a supply controller 445; the supply controller 445 has two further input terminals which are connected to a rechargeable battery 450. The supply controller 445 produces the supply voltage Vcc at an internal terminal; this internal terminal is connected directly to an output terminal Va and is also connected to an output terminal Vb and to an output terminal Vc via respective switches SW7b and SW7c. The terminals Va, Vb and Vc are connected to the supply terminals of the various active components of the charging apparatus. In particular, the charging apparatus includes the microprocessor 270 which is connected (in addition to the memory 275, to the modem 276, to the DTMF device 277, to the interface 280 and to the display 285) also to an internal clock 455, to a keypad 460 (possibly also with Braille keys), to an audio signal generator 465 (which controls the driver circuit 420) and to a video signal generator 470. The charging apparatus also comprises an ultra-high-frequency (UHF) modulator 475. The terminal Va is connected to the microprocessor 270, to the memory 275, to the internal clock 455, and to the keypad 460; the terminal Vb is connected to the DTMF device 277, and the terminal Vc is connected to the modem 276, to the interface 280, to the display 285, to the audio generator 465, to the video generator 470, and to the UHF modulator 475.

The microprocessor 270 also receives input signals Sia and Sib supplied by the current detectors 405a and 405b, respectively, and controls the impedance adaptor 235, the supply controller 445, the switches SW2, SW3, SW5, SW6, SW7a and SW7b and the switches SW4a and SW4b by means of the control signals Sc. The modem 276, the DTMF device 277, the driver circuit 420, and the UHF modulator 475 are connected to the fork 437 in order to receive and to transmit the audio signal on the telephone line. The UHF modulator 475 is also connected to the video generator 470, to an external aerial 480, and to an aerial socket 485 of a television set (TV) 490 so as to apply selectively to the television set 490 the signal received from the aerial 480 or a modulated signal corresponding to the audio signal received from the telephone line and to the video signal received from the generator 470. The television set 490 generally also has a SCART socket 495 to which the impedance adaptor 235 and the generator 470 may alternatively be connected directly in order to supply the audio signal received from the telephone line and the video signal produced, respectively.

Normally (as shown in the drawing), the switch SW3 is closed and the switches SW2, SW5, SW6, SW7b and SW7c are open whilst the switches SW4a and SW4b are in positions in which the input terminal 205a is connected to the output terminal 210a via the switch SW3 and the current detector 405a and the input terminal 205b is connected to the output terminal 210b. In these conditions, the telephone is connected directly to the telephone line and can be used normally by the user. The other components of the charging apparatus are disconnected from the telephone line; the microprocessor 270, the memory 275, the internal clock 455, and the keypad 460 are supplied by the controller 445, whereas the rest of the active components receive no supply voltage and are therefore disabled so as to reduce the energy consumption of the charging apparatus to the minimum in this waiting (stand-by) condition. The UHF modulator 475 connects the aerial 480 directly to the aerial socket 485 of the television set 490, enabling it to be used normally by the user.

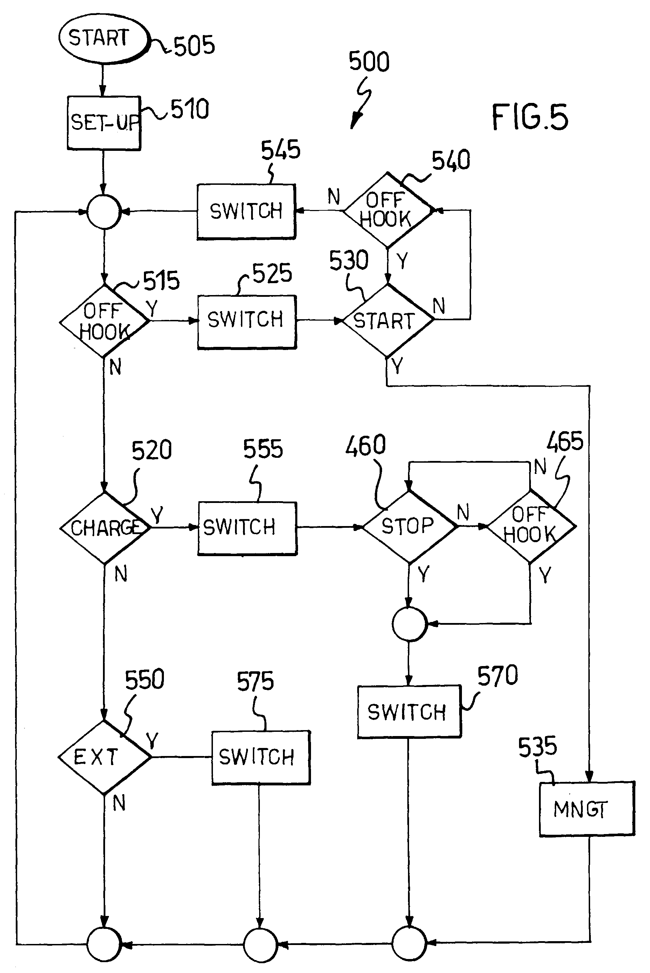

The microprocessor 270 continuously performs a suitable control program loaded initially from the ROM memory 275. With reference to Figure 4 and Figure 5 in combination, a method 500 corresponding to this control program starts in box 505 and then goes to box 510 in which the microprocessor 270 initializes the charging apparatus.
The method then checks, in box 515, whether the telephone is in use; in particular, when the telephone is not in use, no current passes through the detector 405a; when the telephone is in use (for example, when a handset has been picked up) a line current passes through the detector 405a which sends a corresponding signal Sia to the microprocessor 270.

If the telephone is not in use, the method goes on to box 520 (described below). Otherwise, the method goes to box 525 in which the microprocessor 270 closes the switches SW5 and SW7b. In this condition, the DTMF device 277 is supplied (by means of the terminal Vb) so as to receive the signal transmitted on the telephone line, without charging the line. The method then goes on to box 530, in which the microprocessor 270 checks whether the audio signal received from the DTMF device 277 contains tones for activating the charging apparatus. If so (that is, when the user is connected to the remote system and has completed the identification operations) the method goes on to box 535 (described below) whereas if not (that is, when the user is having a normal telephone conversation) the method goes to box 540 in which the microprocessor 270 checks (on the basis of the signal Sia received from the current detector 405a) whether the telephone is still in use.

If the telephone is still in use, the method goes back to box 530 (in a continuous control loop). If not, the method goes to box 545 in which the microprocessor 270 opens the switches SW5 and SW7b so as to deactivate the DTMF device 277; the method then goes back to box 515.

With reference now to box 535, the microprocessor 270 sets the impedance adaptor 235 to the balancing value corresponding to the country of use of the charging apparatus; the microprocessor 270 then closes the switches SW2, SW5, SW6, SW7b and SW7c and switches the switches SW4a and SW4b to positions in which the telephone is disconnected from the telephone line (and is connected, via the current detector 405b, to the driver 420).

In this situation, the telephone line is completely controlled by the charging device (since it is correctly charged for direct current by the regulator 265 and balanced for alternating current by the impedance adaptor 235). All of the active components of the charging apparatus are supplied by the controller 445 (via the terminals Va, Vb and Vc). In particular, the charging apparatus exchanges information with the remote system by means of the modem 276 and the DTMF device 277 (as in the previous embodiment). At the same time, the UHF modulator 475 is put in a condition in which the modulated signal corresponding to the signal received by the video generator 470 and to the audio signal received by the telephone line is applied to the aerial socket 485 of the television set 490. This enables a normal television set to display data and reproduce sounds associated with the charging operation. Alternatively, the telephone receives (via the driver 420) the audio signal sent by the remote centre or a signal produced by the audio generator 465, or state messages are supplied to the user by means of the display 285, etc. Upon completion of the charging operation, the microprocessor 270 opens the switches SW2, SW5, SW6, SW7b and SW7c and switches the switches SW4a and SW4b so that the active components connected to the terminals Vb and Vc are automatically de-activated and the control of the telephone line is restored to the telephone; at the same time, the UHF modulator 475 connects the aerial 480 directly to the aerial socket 485 of the television set 490. The method then goes back to box 515.

With reference now to box 520, the microprocessor 270 checks if the present time (read from the internal clock 455) corresponds to a time (or a series of times) set in the memory 275 for the recharging of the battery 450. If not, the method goes on to box 550 (described below) whereas, in the affirmative case, the method goes to box 555 in which the microprocessor 270 sets the impedance adaptor 235 and then closes the switches SW2, SW5 and SW6 and switches the switches SW4a and SW4b to the positions in which the telephone is disconnected from the telephone line. The telephone line is thus correctly charged for direct current by the regulator 265 and balanced for alternating current by the impedance adaptor 235. The energy obtained from the telephone line (by means of the rectifier circuit 255 and the regulator 265) is used by the supply controller 445 to recharge the battery 450.

This embodiment of the present invention is particularly advantageous since it uses the energy present on the telephone network (within the permitted limits and with the permitted specifications) in order to recharge the battery inside the apparatus, for example, during the night. Alternatively, the supply controller has a connector for connection to an external battery charger, or includes a photovoltaic panel or other equivalent means, possibly in combination.

With reference now to box 560, the microprocessor 270 checks whether a predetermined recharging period has elapsed. If the recharging period has not elapsed, the method goes to box 565 in which the microprocessor 270 checks, in dependence on the signal Sib received from the current detector 405b, whether the user has requested use of the telephone; if not, the method goes back to box 560 (in a continuous control loop), whereas in the affirmative case, the method goes to box 570. If the recharging period has elapsed, the method goes directly to box 570.

At this point, the microprocessor 270 (in box 570) stops the recharging of the battery 450, opens the switches SW2, SW5 and SW6, and switches the switches SW4a and SW4b to the positions in which the telephone is connected to the telephone line. The method then goes back to box 515.

With reference now to box 550, the method checks whether the user has activated a request (by means of the keypad 460) for off-line operations on the charging apparatus. If not, the method goes back to box 515, whereas in the affirmative case, the method goes to box 575 in which the microprocessor 270 closes the switches SW7b and SW7c. In this condition, all of the active devices of the charging apparatus are supplied by the controller 445. Menus are displayed on the television set 490 (or on the display 285) so that the user can perform, by means of the keypad 460, various operations such as, for example, changing the date and the time of the internal clock 455, changing the times for recharging the battery 450, displaying data previously received by the telephone line and stored in the RAM memory 275, and cancelling such data. It should be noted that, in this situation, the telephone is connected directly to the telephone line and can be used normally by the user. Upon completion of these off-line operations, the microprocessor 270 opens the switches SW7b and SW7c so that the active components connected to the terminals Vb and Vc are automatically de-activated. The method then goes back to box 515 in order to repeat the above-described loop continuously.
This embodiment of the present invention is particularly functional, easy to use and very flexible.

Naturally, in order to satisfy contingent and specific requirements, an expert in the art may apply to the above-described apparatus for charging a credit onto a portable device for holding electronic cash many modifications and variations all of which, however, are included within the scope of protection of the invention as defined by the following claims.

## Claims

1. Apparatus (100) for charging a portable device (105) for holding electronic cash, comprising means (270, 276, 277, 280) for adding a credit to the portable device (105) for holding electronic cash in response to corresponding control signals,
characterized in that
the apparatus includes first connection means (112, 115, 120) for connection to a telephone network (130) and second connection means (135) for connection to a telephone (140), the telephone (140) controlling connection of the charging apparatus (100), by means of the telephone network (130), to a remote system (145) which can supply the credit, the remote system (145) sending the control signals to the charging apparatus (100).

2. Charging apparatus (100) according to Claim 1, in which the means (270, 276, 277, 280) for adding the credit include means (276, 277) for receiving an audio signal from the telephone network (130), an interface (280) for the portable device (105), and control logic means (270).

3. Charging apparatus (100) according to Claim 2, in which the receiving means (276, 277) include a modem (276) and a DTMF code receiver (277).

4. Charging apparatus (100) according to any one of Claims 1 to 3, further comprising means (P1, 270; 270) for switching the charging apparatus (100) between an inactive condition in which the telephone (140) is connected to the telephone network (130) and the credit-adding means (270, 276, 277, 280) are disconnected from the telephone network (130), and an active condition, in which the telephone (140) is disconnected from the telephone network (130) and the credit-adding means (270, 276, 277, 280) are connected to the telephone network (130), the charging apparatus (100) further comprising absorption means (225, 265) and reactive means (230, 235) which are connected to the telephone network (130) in the active condition in order to charge the telephone network (130) for direct current and to balance the telephone network (130) for alternating-current, respectively.

5. Charging apparatus (100) according to Claim 4, in which the reactive means (230, 235) include a variable impedance adaptor (235), the charging apparatus (100) further comprising means (220, 270) for setting the impedance of the adaptor (235) to a selected value.

6. Charging apparatus (100) according to Claim 4 or Claim 5, in which the credit-adding means (270, 276, 277, 280) do not receive a supply in the inactive condition, and are supplied by the absorption means (255, 265) in the active condition, the switching means including a device (P1) for switching the charging device (100) manually from the inactive condition to the active condition in response to a request sent by the remote system (145), the logic means (270) automatically switching the apparatus (100) from the active condition to the inactive condition upon completion of a charging operation.

7. Charging apparatus (100) according to Claim 4 or Claim 5, further comprising means (445, 450) for continuously supplying the logic means (270) and for selectively supplying the receiving means (276, 277) and the interface means (280), and means (405a) for detecting a condition of use of the telephone (140), in which the logic means (270) bring about the supply of the receiving means (277) when the telephone (140) is in use in order to check whether a connection is established with the remote centre (145) and, when the connection with the remote centre (145) is established, bring about the supply of the interface means (280) and switch the charging apparatus (100) from the inactive condition to the active condition in order to perform a charging operation.

8. Charging apparatus (100) according to Claim 7, in which the supply means (445, 450) include a rechargeable battery (450), the logic means (270) periodically connecting the absorption means (225, 265) and the reactive means (230, 235) to the telephone network (130) in order to recharge the battery (450).

9. Charging apparatus (100) according to any one of Claims 1 to 8, further comprising third connection means (475) for connection to a television set (490) and means (470) for generating a video signal for display on the television set (490).

10. A method of charging a portable device (105) for holding electronic cash, comprising the step of adding a credit to the portable device (105) for holding electronic cash in response to corresponding control signals, the method being characterized by the steps of:
connecting the charging apparatus (100), by means of a telephone network (130), to a remote system (145) which can supply the credit, the connection being controlled by means of a telephone (140),
sending the control signals from the remote system (145) to the charging apparatus (100).
